# EUROPÄISCHE PATENTSCHRIFT

(11) **EP 0 678 951 B1**
(45) Veröffentlichungstag und Bekanntmachung des Hinweises auf die Patenterteilung: **12.11.1997**
(21) Anmeldenummer: 95102119.5
(22) Anmeldetag: 16.02.1995
(51) Int. Cl.: H02B 11/24, H02B 1/21

(54) **Berührungsschutzprofil für eine Stromverteilschiene**
Protection profile against accidental contact for a bus bar
Profil de protection contre les contacts accidentels pour une barre omnibus

(30) Priorität: 18.04.1994 DE 9406318 U
(43) Veröffentlichungstag der Anmeldung: 25.10.1995
(73) Patentinhaber: ELEK GMBH, D-41470 Neuss (DE)
(72) Erfinder: Loosen, Gottfried, D-47877 Willich (DE); Noreike, Gerhard, D-41564 Kaarst (DE); Obsommer, Nikolaus, D-4151 Grevenbroich (DE); Rübsam, Hans J., D-40670 Meerbusch (DE)
(74) Vertreter: Palgen, Peter, Dr. Dipl.-Phys.

(56) Entgegenhaltungen:
- EP-A- 0 171 060
- EP-A- 0 411 727
- FR-A- 2 562 344
- US-A- 3 096 131
- US-A- 3 219 887
- US-A- 3 469 149
- US-A- 3 708 725
- US-A- 4 180 845
- US-A- 4 916 574

## Beschreibung

Die Erfindung bezieht sich auf ein Berührungsschutzprofil der dem Oberbegriff des Anspruchs 1 entsprechenden Art (Siehe US-A-3 469 149).

Ein solches Berührungsschutzprofil ist auch aus der EP-A-0 621 668 (Artikel 54(3)EPÜ) bekannt. Die bekannte Ausführungsform wird paarweise zu beiden Seiten der Stromverteilschiene eingesetzt und liegt elastich an deren vorderer Kante von der Seite her an. Die paarweise vorhandenen Berührungsschutzprofile schließen also die Stromverteilschiene zwischen sich ein. Beim Einführen eines Klemmkontaktes werden Berührungsschutzprofile in Querrichtung auseinandergedrängt, was durch eine entsprechende Abschrägung der vorderen Ränder derselben erleichtert wird.

Es hat sich gezeigt, daß, wenn die Berührungsschutzprofile eine für eine sichere und nicht versehentlich wegdrückbare Abdeckung ausreichende Stabilität aufweisen, das Einführen der Klemmkontakte von vorn manchmal erschwert ist, weil die vordere Kante der Klemmkontakte an den Schrägen der Berührungsschutzprofile hakt.

Der Erfindung liegt die Aufgabe zugrunde, einen sicheren Berührungsschutz für Stromverteilschienen zu schaffen, bei dem das Einführen der Klemmkontakte erleichtert ist.

Diese Aufgabe wird durch die in Anspruch 1 wiedergegebene Erfindung gelöst.

Je ein Berührungsschutzprofil ist einer einzelnen Stromverteilschiene zugeordnet und deckt diese von und an den Seiten ab. Für den Durchgriff der Klemmkontakte bedarf es nicht mehr des elastischen Auseinanderdrückens eines Paars von Berührungsschutzprofilen, sondern es werden die Klemmkontakte ohne Widerstand durch die dafür vorgesehenen und im Querschnitt den Klemmkontakten angepaßten Durchbrüche an der Vorderseite des das Berührungsschutzprofil bildenden Kanalprofils hindurchgeführt. Die Durchbrüche sind so bemessen, daß die Klemmkontakte gerade hindurchpassen, daß aber ein Finger nicht versehentlich hineingesteckt und die geschützte Stromverteilschiene nicht erreicht werden kann. Dadurch, daß die Durchbrüche in Längsrichtung des Berührungsschutzprofils dicht aufeinanderfolgen, ist die Positionierung der Klemmkontakte längs der Stromverteilschienen nicht in relevanter Weise behindert. Die Zuordnung des Berührungsschutzprofils zu nur einer einzelnen Stromverteilschiene macht die Schutzabdeckung vom Querabstand der die verschiedenen PhaSEN FÜHRENDEN Stromverteilschienen unabhängig.

Das Kanalprofil kann aus einem geeigneten GFK-Material extrudiert werden, wobei die Durchbrüche aus der Vorderseite nachträglich mit einem geeigneten Werkzeug ausgestanzt werden. Die Länge des Berührungsschutzprofils entspricht der Länge der abzudeckenden Stromverteilschienen. Es geht also in einem Stück über die Abdecklänge hindurch.

Dies ist ein Vorteil gegenüber einer bekannten Schutzabdeckung, bei der vor den Stromverteilschienen für den Durchgriff der Klemmkontakte gelochte Tafeln angebracht werden, die zu mehreren eine Gesamtabdeckung der Stromverteilschienenanordnung ermöglicht. Hierbei ist die Abdeckung indessen über die Länge nicht einstückig und besteht auch eine geringere Freiheit in der Anordnung der Klemmkontakte, weil die einzelnen Abdecktafeln natürlich vorgefertigt sind.

Das Kanalprofil der Erfindung weist vorteilhaft einen Hutquerschnitt auf und ist mit der "Krempe des Huts" an dem Träger der Stromverteilschiene befestigt, so daß keinerlei zusätzliche Befestigungsmittel angebracht werden müssen

Gemäß Anspruch 2 kann die vordere Seite des Kanalprofils mit einer üblichen Kabelkanalabdeckung, die als flaches mit zur gleichen Seite abgewinkelten Rändern versehenes Kunststoffprofil in vorgegebenen Abmessungen zur Verfügung steht, geschlossen sein, so daß die Stromverteilschiene rundum eingeschlossen ist.

Zweckmäßig ist gemäß Anspruch 3 die Vorderseite des Kanalprofils eben, was die Einbringung der Durchbrüche durch Stanzen erleichtert.

Die Klemmkontakte legen sich an beiden Seiten der Stromverteilschiene an, die eine Dicke von beispielsweise 10 mm haben kann. Die Klemmkontakte haben also quer zur Stromverteilschiene einen gewissen Abstand voneinander. Um in der Vorderseite des Kanalprofils diesen Abstandsraum zu schliessen, empfehlen sich die Längsstege des Anspruchs 4. Hierdurch ist verhindert, daß die Durchbrüche für einander zugeordnete und gegenüberliegende Klemmkontakte zu groß werden.

Aus dem gleichen Grund können die Vorsprünge nach Anspruch 5 vorgesehen werden.

Die Vorderseite der Stromverteilschienen ist für eine Stromübertragung funktionslos, da die Klemmkontakte an den Flanken anliegen. Sie stellen aber ein Berührungsrisiko dar, weil sie unter Umständen durch die Durchbrüche hindurch z.B. mit einem Werkzeug erreichbar sind.

Die Sicherheit des Berührungsschutzes wird bedeutend erhöht, wenn dem erfindungsgemäßen Berührungsschutzprofil eine besondere Stromschiene gemäß Anspruch 6 zugeordnet ist, die an der Vorderseite eine elektrisch isolierte Abdeckleiste aufweist.

Mit einem geraden Werkzeug, wie z.B. einem Schraubendreher, der versehentlich in einen Durchbruch hineingerät, läßt sich ein elektrischer Kontakt der Abdeckleiste nicht mehr herstellen.

In der Zeichnung ist ein Ausführungsbeispiel der Erfindung dargestellt.
Fig. 1 zeigt eine perspektivische Ansicht eines Schaltschrankes;
Fig. 2 zeigt eine perspektivische Ansicht der Rückseite eines Schaltgeräts mit den von der Vorderseite des Schaltschrankes her auf die Stromverteilschienen aufschiebbaren Klemmkontakten;
Fig. 3 zeigt eine Ansicht eines Abschnitts eines erfindungsgemäßen Berührungsschutzprofils von vorn;
Fig. 4 zeigt einen Horizontalschnitt durch eine Stromverteilschiene mit Berührungsschutzprofil.

Wenn im folgenden von "vorn" die Rede ist, so bezieht sich dies auf einen vor einem in Betriebsstellung befindlichen stehenden Betrachter.

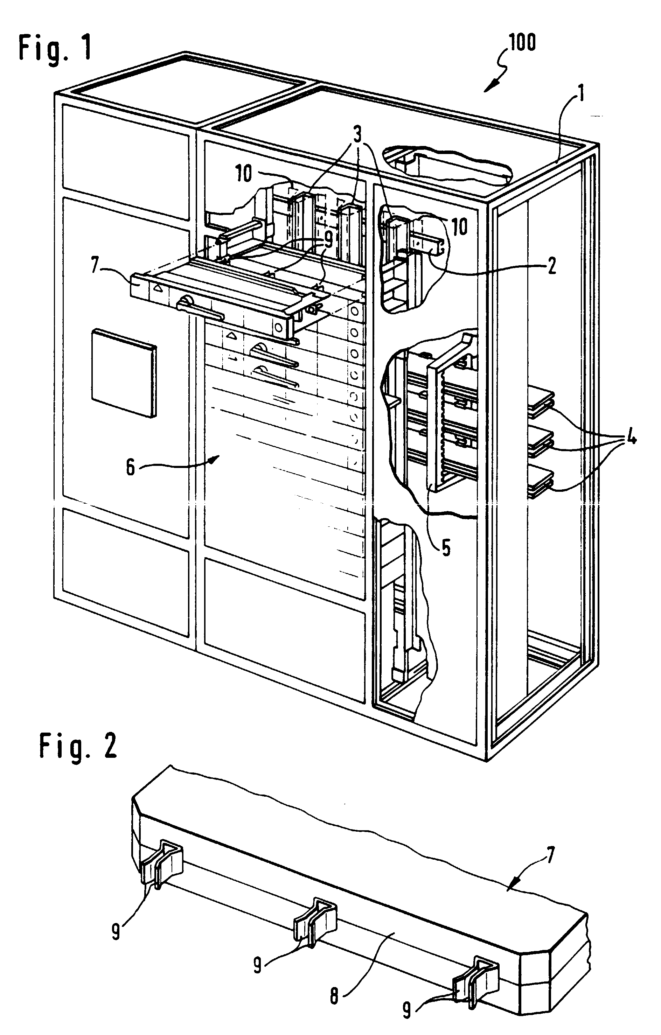

Der in Fig. 1 mit 100 bezeichnete Schaltschrank umfaßt eine Anzahl von mit dem Rahmen 1 des Schaltschranks 100 verbundenen, über die Höhe des Schaltschranks 100 verteilten Querträgern 3 aus Kunststoff, an denen ein Satz von die drei Phasen führenden vertikalen Stromverteilschienen 3 befestigt ist.

Rückseitig der Stromverteilschienen 3 sind in Querrichtung Sammelschienen 4 in dem Schaltschrank 100 angeordnet, mit denen die Stromverteilschienen 3 verschraubt sind und die der Stromzuführung unter anderem zu den drei gezeichneten vertikalen Stromverteilschienen dienen. Die Sammelschienen 4 sind durch mehrere elektrisch isolierende Sammelschienenhalter 5 in dem Schaltschrank 100 befestigt. In einem dafür vorgesehenen Funktionsraum 6 sind Schaltgeräte 7 horizontal von vorn einschiebbar, welche in komplett eingeschobenem Zustand über an ihrer Rückseite (Fig. 2) vorgesehene, jeweils eine Stromverteilschiene 3 an ihren beiden Flanken erfassende Klemmkontakte 9 (Stecktulpen) mit den Stromverteilschienen 3 kontaktiert sind. Die Stromverteilschienen 3 müssen also in drei verschiedenen Höhen für die Klemmkontakte 9 von vorn zugänglich sein. Wenn sie unter Spannung stehen, muß eine Berührung durch geeignete Maßnahmen unterbunden werden können.

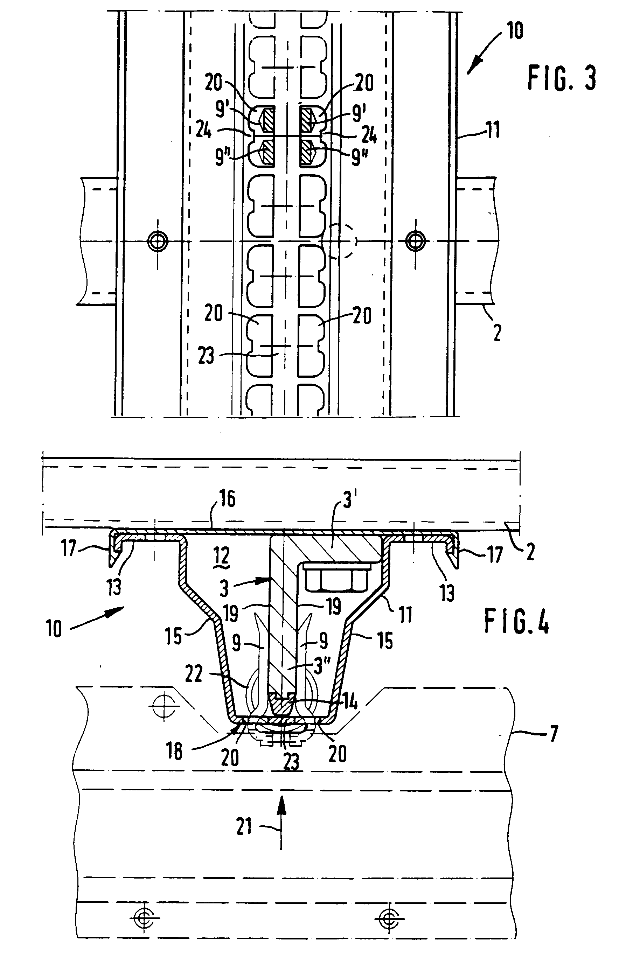

Hierzu dient ein jeder einzelnen Stromschiene 3 separat zugeordnetes Berührungsschutzprofil 10, welches in Fig. 1 durch seinen Querschnitt nur gestrichelt angedeutet ist. In den Fig. 3 und 4 ist das Berührungsschutzprofil 10 im einzelnen dargestellt.

Das Berührungsschutzprofil 10 besteht aus einem Kanalprofil 11 von etwa hutförmigem Querschnitt, dessen von dem Rand des Kanals 12 nach außen ausladende, in der gleichen Ebene gelegene Ränder 13 der Befestigung des Berührungsschutzprofils 10 an den Trägern 2 dienen.

Wie aus Fig. 4 zu ersehen ist, ist die Stromverteilschiene 3 als Winkelprofil mit einem Auflagechenkel 3' und einem nach vorn weisenden Stromkontaktschenkel 3'' ausgebildet. Der durch das Kanalprofil 11 gebildete Kanal 12 ist an seinem "oberen", da heißt auf der Seite des Auflageschenkels gelegenen Teil, gerade so breit, daß der Auflageschenkel 3' untergebracht werden kann. Die "Tiefe" des Kanalprofils 11 entspricht der Tiefenerstreckung des Stromkontaktschenkels 3'', der längs seiner vorderen Kante eine elektrisch isolierende Abdeckleiste 14 trägt.

In dem Ausführungsbeispiel sind die V-förmig schrägstehenden, sich gegen den Boden hin einander annähernden Seitenwandungen 15 des Kanalprofils 11 doppelt abgewinkelt, so daß sie im wesentlichen dem Querschnitt der Stromverteilschiene 3 folgen.

Die offene Seite des Kanals 12 ist durch eine aus Kunststoff bestehende Kabelkanalabdeckung 16 abgedeckt, die mit ihren nach vorn abgewinkelten Rändern 17 die Randflächen 13 umgreift und sich an deren Kante einhakt. Die Kabelkanalabdeckung 16 wird zwischen dem Anlageschenkel 3' der Stromverteilschiene 3 und dem Träger 2 eingespannt.

Der "Boden" des Kanals 12 ist durch eine ebene, in der Betriebsstellung vertikale, frontal zur Bedienungperson stehende Vorderseite 18 gebildet, die in Längsrichtung des Berührungsschutzprofils 10 dicht aufeinanderfolgende Paare von einander in Querrichtung gegenüberliegenden Durchbrüchen 20 aufweist, die jeweils durch einen in Längsrichtung verlaufenden Steg 23 voneinander getrennt sind.

Die Durchbrüche 20 sind in ihrem Querschnitt so bemessen, daß sich die Klemmkontakte 9, die an den Flanken 19 des Stromkontaktschenkels 3'' angreifen, gerade von vorn hindurchführen lassen. Der Querschnitt der Durchbrüche 20 ist also so klein wie möglich gewählt, damit ein versehentlicher Zugang mit einem Finger von vorn durch die Durchbrüche 20 hindurch zu der Stromverteilschiene unmöglich gemacht wird.

Die Klemmkontakte sind an einem Schaltgerät 7 befestigt. Dieses wird mit den Klemmkontakten 9 von vorn durch die Durchbrüche 20 hindurch eingeschoben, wobei die Klemmkontakte 9 auf die Flanken 19 der Stromverteilschiene 3 im Sinne des Pfeiles 21 aufgleiten. Der Kontaktdruck wird durch eine Stahldrahtfeder 22 unterstützt. Für das Aufschieben sind nur die durch den Kontaktdruck bedingten Reibungskräfte zu überwinden, an dem Kanalprofil 11 selbst findet keinerlei Verformung statt.

Die Klemmkontakte 9 in den Fig. 3 und 4 unterschieden sich von den in Fig. 2 dargestellten Klemmkontakten dadurch, daß sie in Längsrichtung der Druckverteilschiene 3 paarweise ausgebildet sind, wie es aus Fig. 3 ersichtlich ist. Jeder einzelne Klemmkontakt 9 besteht also aus zwei Kontaktzungen 9',9", um die Nachgiebigkeit und die Anpassungsfähigkeit der Klemmkontakte zu erhöhen. In Höhe des in Längsrichtung der Stromverteilschiene gelegenen Abstands zwischen den Kontaktzungen 9',9" ragt von der Außenseite der Durchbrüche 20 her ein Vorsprung 24 in den freien Querschnitt der Durchbrüche 20, um deren Querschnitt weiter zu verringern. Die auf gleicher Höhe liegenden Durchbrüche 20 haben also etwa die Gestalt zweier mit dem Rücken einander zugewandter "B".

## Patentansprüche

1. Berührungsschutzprofil für eine Stromverteilschiene (3), insbesondere eine Feldverteilschiene in Niederspannungsverteilerschränken, in Gestalt eines sich längs der Stromverteilschiene (3) erstreckenden, die Berührung der Stromverteilschiene (3) verhindernden, die Kontaktierung der Stromverteilschiene (3) mittels spangenartig deren Flanken (19) umfassender Klemmkontakte (9) jedoch ermöglichenden Kunststoffprofils, das durch ein die Stromverteilschiene (3) abdeckendes, im wesentlichen geschlossenes Kanalprofil (11) gebildet ist, welches längs der Vorderseite (18) in dichter Folge an den Querschnitt der Klemmkontakte (9) angepaßte, deren Durchgriff gerade erlaubenden, den Durchgriff eines Fingers bis zur Stromverteilschiene (3) jedoch verhindernde Durchbrüche (20) aufweist, **dadurch gekennzeichnet,** daß das Kanalprofil (11) einen Hutquerschnitt aufweist und mit den der "Krempe des Huts" entsprechenden, in einer Ebene liegenden, vom Kanalrand ausladenden Randflächen (13,13) an dem Träger (2) der Stromverteilschiene (3) befestigt ist.

2. Berührungsschutzprofil nach Anspruch 1, **dadurch gekennzeichnet,** daß die offene Seite des Kanalprofils (11) von einer üblichen Kabelkanalabdeckung (16) geschlossen ist, deren Ränder (17) die äußeren Kanten der Randflächen (13,13) umgreifen.

3. Berührungsschutzprofil nach Anspruch 1 oder 2, **dadurch gekennzeichnet,** daß die Vorderseite (18) des Kanalprofils (11) eben und zur Ebene des Stromkontaktschenkels (3") der Stromverteilschiene (3) senkrecht ist.

4. Berührungsschutzprofil nach einem der Ansprüche 1 bis 3, **dadurch gekennzeichnet,** daß die Durchbrüche (20,20) für die an den beiden Flanken (19) der Stromverteilschiene (3) zur Anlage zu bringenden zusammengehörigen Klemmkontakte (9,9) getrennt ausgebildet und durch einen Längssteg (23) voneinander getrennt sind.

5. Berührungsschutzprofil nach einem der Ansprüche 1 bis 4, **dadurch gekennzeichnet,** daß bei in Längsrichtung der Stromverteilschiene (3) paarweise vorhandenen Klemmkontakten (9',9") in den jeweiligen Durchbruch (20) von dessen äußerem Rand her zwischen den Klemmkontakten (9',9") eines Paars jeweils ein Vorsprung (24) hineinragt.

6. Berührungsschutzprofil nach einem der Ansprüche 1 bis 5, **dadurch gekennzeichnet,** daß ihm eine Stromverteilschiene (3) zugeordnet ist, die eine ihre Vorderseite überdeckende, längs derselben verlaufende, elektrisch isolierende Abdeckleiste (14) trägt.

## Claims

1. Profile for protecting a busbar (3), in particular a local distribution busbar in low voltage distribution cabinets, against accidental contact, in the form of a plastics profiled section extending along the busbar (3), preventing contact with the busbar (3) yet allowing engagement of the busbar (3) by clamping contacts (9) embracing its side faces (19) in a clasping manner, the section being formed by a substantially closed channel section (11) which covers over the busbar (3) and has openings (20) along its front face (18) in close sequence matching the cross-section of the clamping contacts (9), of which the passage is just permitted, but the access of a finger as far as the busbar (3) is prevented, characterised in that the channel section (11) has a top-hat cross-section and is secured to the carrier (2) of the busbar (3) by the edge flanges (13, 13) extending from the edge of the channel and lying in one plane and corresponding "rim of the hat".

2. Protective profile according to claim 1, characterised in that the open side of the channel section (11) is closed by a conventional cable trunking covering (16) of which the edges (17) engage over the outer edges of the flanges (13, 13).

3. Protective profile according to claim 1 or 2, characterised in that the front face (18) of the channel section (11) is flat and is perpendicular to the plane of the current contact limb (3") of the busbar (3).

4. Protective profile according to one of claims 1 to 3, characterised in that the openings (20, 20) for the mutually associated clamping contacts (9, 9) for bringing into engagement against the two side side faces (19) of the busbar (3) are formed separately and are separated by a longitudinal web (23).

5. Protective profile according to one of claims 1 to 4, characterised in that, with clamping contacts (9', 9") provided in pairs in the direction of the length of the busbar (3), a respective projection (24) extends into the respective opening (20) from its outer edge between the clamping contacts (9', 9") of a pair.

6. Protective profile according to one of claims 1 to 5, characterised in that it has associated with it a busbar (3) which carries an electrically insulating covering strip (14) extending along it and covering its front edge.

## Revendications

1. Profil de protection contre les contacts accidentels pour une barre omnibus (3), en particulier une barre de répartition du champ dans des armoires de distribution de basse tension, sous la forme d'un profilé en matière plastique s'étendant le long de la barre omnibus (3), empêchant le contact accidentel de la barre omnibus (3), rendant possible toutefois le contact des barres omnibus (3) au moyen des contacts de serrage (9) entourant en forme de boucle leurs flancs (19), profilé en matière plastique qui est formé par un profil de canal (11) essentiellement fermé, recouvrant la barre de distribution de courant (3), profilé (11) qui comporte le long de la face avant (18) en une suite dense, des passages 20, adaptés à la section transversale des contacts de serrage (9), permettant juste de les traverser, empêchant toutefois le passage d'un doigt jusqu'à la barre omnibus (3),
caractérisé en ce que
le profilé de canal (11) comporte une section en forme de chapeau et est fixé par les surfaces des bords (13, 13) correspondant au « rebord du chapeau », se situant dans un plan se déchargeant du bord du canal, au support (2) de la barre omnibus (3).

2. Profil de protection contre les contacts accidentels,
caractérisé en ce que
le côté ouvert du profilé du canal (11) est fermé par un recouvrement habituel de canal de câbles (16) dont les bords (17) entourent les bords extérieurs des surfaces de bord (13, 13).

3. Profil de protection contre les contacts accidentels selon la revendication 2,
caractérisé en ce que
le bord avant (18) du profil de canal (11) est plan et est perpendiculaire par rapport au plan de la branche de contact du courant (3") de la barre omnibus (3).

4. Profil de protection contre les contacts accidentels selon une des revendications 1 à 3,
caractérisé en ce que
les passages (20, 20) pour les contacts de serrage (9, 9) appartenant à l'installation à poser sur les deux flancs (19) de la barre omnibus (3), sont réalisées séparément et sont séparées l'une de l'autre par une entretoise longitudinale (23).

5. Profil de protection contre les contacts accidentels selon une des revendications 1 à 4,
caractérisé en ce que
dans le cas de contacts de serrage (9', 9") existant par paire dans le sens longitudinal de la barre omnibus (3), respectivement une saillie (24) dépasse intérieurement dans l'ouverture respective (20) depuis son bord extérieur entre les contacts de serrage (9', 9") d'une paire.

6. Profil de protection contre les contacts accidentels selon une des revendications 1 à 5,
caractérisé en ce qu'
une barre omnibus (3) lui est associée, qui porte une barre de recouvrement (14) électriquement isolante, se développant longitudinalement à la barre (3) et recouvrant sa face antérieure.
